# EUROPÄISCHE PATENTSCHRIFT

(11) **EP 4 489 049 B1**
(45) Veröffentlichungstag und Bekanntmachung des Hinweises auf die Patenterteilung: **18.03.2026**
(21) Anmeldenummer: 23183616.4
(22) Anmeldetag: 05.07.2023
(51) Int. Cl.: H02H 3/087, H02H 3/44, H02H 1/00, H01H 83/20

(54) **ELEKTRONISCHER SCHUTZSCHALTER, SCHALTUNGSANORDNUNG MIT EINEM ELEKTRONISCHEN SCHUTZSCHALTER UND VERFAHREN ZUM VERHINDERN EINES STÖRLICHTBOGENS MITTEL EINES ELEKTRONISCHEN SCHUTZSCHALTERS**
ELECTRONIC CIRCUIT BREAKER, CIRCUIT ARRANGEMENT COMPRISING AN ELECTRONIC CIRCUIT BREAKER AND METHOD FOR PREVENTING A FAULT ARC BY MEANS OF AN ELECTRONIC CIRCUIT BREAKER
DISJONCTEUR ÉLECTRONIQUE, CIRCUIT COMPRENANT UN DISJONCTEUR ÉLECTRONIQUE ET PROCÉDÉ POUR EMPÊCHER UN ARC ÉLECTRIQUE PARASITE PAR MOYENS D'UN DISJONCTEUR ÉLECTRONIQUE

(43) Veröffentlichungstag der Anmeldung: 08.01.2025
(73) Patentinhaber: Murrelektronik GmbH, 71570 Oppenweiler (DE)
(72) Erfinder: Pan, Hangwen, 71522 Backnang (DE); Manhalter, Marcel, 71560 Sulzbach an der Murr (DE); Matheis, Nils, 71549 Auenwald (DE)
(74) Vertreter: Karzel, Philipp

(56) Entgegenhaltungen:
- EP-A1- 3 916 940
- US-A1- 2020 366 079
- US-B2- 7 064 944

## Beschreibung

Die Erfindung betrifft eine Vorrichtung nach dem Oberbegriff des Anspruchs 1.

Aus der DE 10 2011 120 466 A1 ist ein elektronischer Schutzschalter zum Schutz von in einem elektrischen Stromkreis angeordneten elektrischen Verbrauchern im Falle eines Defekts, beispielsweise bei einem Kurzschluss, bekannt. EP3916940A1 offenbart einen bekannten elektronischen Schutzschalter gemäß dem Oberbegriff des Anspruchs 1.

Während eines bestimmungsgemäßen Betriebs eines elektrischen Stromkreises kann infolge einer schadhaften Isolation oder eines Bruchs einer elektrischen Leitung, kurz Leitung, zwischen einer Spannungsquelle und einem elektrischen Verbraucher, kurz Last, sowie an einem Wackelkontakt zwischen der Spannungsquelle und der Last ein sogenannter Störlichtbogen (SLB) entstehen. Die Spannungsquelle kann ein Netzteil, eine Batterie, eine Abgang einer Stromschiene oder ein ähnliches Bauteile zur elektrischen Energieversorgung sein. Der Störlichtbogen kann nicht nur Komponenten des elektrischen Stromkreises beschädigen oder zerstören, sondern mit deutlich schlimmeren Folgen sogar Verletzungen von Personen oder einen Brand verursachen. Insofern gibt es einen Bedarf an elektronischen Schutzschaltern, welche die Gefahr eines Störlichtbogens verringern.

Der Erfindung liegt die Aufgabe zugrunde, einen gattungsgemäßen elektronischen Schutzschalter derart weiterzubilden, dass er während eines bestimmungsgemäßen Betriebs eines Stromkreises ein Entstehen eines Störlichtbogens in dem Stromkreis verhindern kann.

Diese Aufgabe wird durch einen elektronischen Schutzschalter mit den Merkmalen des Anspruchs 1 gelöst.

Erfindungsgemäß umfasst der elektronische Schutzschalter einen Eingang und einen Ausgang. Zwischen dem Eingang und dem Ausgang verläuft ein Strompfad für einen Laststrom. In dem Strompfad ist ein Stellglied angeordnet, das einen geschlossenen Zustand und einen offenen Zustand besitzt. Im offenen Zustand ist der Strompfad geöffnet und sperrt den Laststrom. Im geschlossenen Zustand ist der Strompfad geschlossen und lässt den Laststrom passieren. Das Stellglied kann als ein MOSFET (Metal Oxid Semiconductor Field Effect Transistor), ein IGBT (Insulated Gate Bipolar Transistor), ein elektromagnetisch, elektrothermisch oder elektromotorisch betätigter mechanischer Schalter oder eine hybride Kombination der vorgenannten und weiterer Beispiele ausgebildet sein.

Der elektronische Schutzschalter umfasst ferner eine Steuereinheit. Die Steuereinheit ist dazu ausgebildet, das Stellglied zwischen dem offenen Zustand und dem geschlossenen Zustand zu schalten. Im bestimmungsgemäßen Betrieb des elektronischen Schutzschalters liegt an dem Eingang eine Eingangsspannung Uᵢₙ an.

Nach der Erfindung umfasst der elektronische Schutzschalter einen Energiespeicher, der elektrisch mit dem Strompfad verbunden ist. Der elektronische Schutzschalter ist so ausgelegt, dass bei Anordnung des elektronischen Schutzschalters in einem Stromkreis zur Durchleitung des Laststroms durch den Strompfad der Steuereinheit ein Ladungssignal übermittelt wird, dessen Änderung mit einer Ladungsänderung des geladenen Energiespeichers korreliert, die Steuereinheit bei einer anhand des Ladungssignals detektierten Entladung des Energiespeichers im geschlossenen Zustand des Stellglieds eine Entladezeit misst, während derer der Energiespeicher ununterbrochen entladen wird und die Steuereinheit bei Überschreiten eines Grenzwerts für die Entladezeit das Stellglied in den offenen Zustand schaltet, wodurch die Entstehung eines Störlichtbogens in dem Stromkreis verhindert wird. Die Steuereinheit empfängt das Ladungssignal. Das Ladungssignal ist ein messbarer und gemessener Wert einer physikalischen Größe, die mit dem Ladezustand des Energiespeichers korreliert und der Steuereinheit während des bestimmungsgemäßen Betriebs des Stromkreises ermöglicht festzustellen, ob der Energiespeicher geladen oder entladen wird.

Ein in dem Stromkreis entstehender Störlichtbogen, insbesondere ein serieller Störlichtbogen (SSLB) in einer mit dem Eingang des elektronischen Schutzschalters verbundenen elektrischen Leitung, bewirkt ein Sinken der Eingangsspannung Uᵢₙ des elektronischen Schutzschalters. Der Energiespeicher wirkt der sinkenden Eingangsspannung Uᵢₙ durch die Entladung entgegen. Wenn die detektierte Entladung länger anhält als der Grenzwert für die Entladezeit, trennt die Steuereinheit die Last durch Schalten des Stellglieds in den offenen Zustand, d.h. durch ein Unterbrechen des Strompfads, von einer Spannungsquelle des Stromkreises, wodurch der entstehende insbesondere serielle Störlichtbogen verhindert bzw. unmittelbar gelöscht wird.

Mit anderen Worten unterscheidet der elektronische Schutzschalter einen insbesondere seriellen Störlichtbogen von betriebsbedingten Schwankungen des Stromkreises anhand einer Dauer der Entladung. Während betriebsbedingte Schwankungen des Stromkreises üblicherweise sehr kurze Entladungen des Energiespeichers nach sich ziehen, bewirkt ein insbesondere serieller Störlichtbogen eine relativ lange Entladung des Energiespeichers.

Der elektronische Schutzschalter kann als ein integriertes Bauteil ausgebildet sein, das ein Gehäuse umfasst, in dem alle Komponenten des elektronischen Schutzschalters angeordnet sind. Alternativ können Komponenten des elektronischen Schutzschalters in dem Stromkreis verteilt angeordnet und/oder in Komponenten des Stromkreises integriert sein. Beispielsweise können der Energiespeicher und die Steuereinheit einerseits und das Stellglied andererseits an gegenüberliegenden Endabschnitten der elektrischen Leitung angeordnet sein. Ebenso ist es möglich, dass der elektronische Schutzschalter in die Last des Stromkreises integriert ist.

Vorteilhaft ist der elektronische Schutzschalter so ausgelegt, dass die Steuereinheit ununterbrochen das Ladungssignal überwacht und für den Fall einer Entladung des Energiespeichers die Entladezeit bestimmt, insbesondere misst. Auf diese Weise reagiert der elektronische Schutzschalter während des bestimmungsgemäßen Betriebs des Stromkreises jederzeit auf die mögliche Entladung des Energiespeichers.

Zweckmäßig ist der Laststrom ein Gleichstrom. Störlichtbögen sind insbesondere in Gleichspannungsanlagen problematisch. Im Unterschied zu Wechselspannungsanlagen weist die Versorgungsspannung U_{S} zu keinem Zeitpunkt einen Nulldurchgang auf, der ein Erlöschen des insbesondere seriellen Störlichtbogens bewirken kann.

Wenn die Spannungsquelle die Versorgungsspannung U_{S} als eine Gleichspannung bereitstellt, fließt in dem Stromkreis der Laststrom als ein Gleichstrom. Moderne elektrische Gleichspannungsanlagen werden zugunsten einer höheren Energieeffizienz zunehmend für höhere Versorgungsspannungen U_{S} ausgelegt. Je höher die bereitgestellte Gleichspannung ist, desto höher ist allerdings die Gefahr eines insbesondere seriellen Störlichtbogens. Hinzu kommt, dass in einer Gleichspannungsanlage ein entstandener insbesondere serieller Störlichtbogen Bestand hat.

Zweckmäßig wird die Entstehung des Störlichtbogens bei geschlossenem Zustand des Stellglieds durch die Entladung des Energiespeichers verhindert. Während des bestimmungsgemäßen Betriebs des Stromkreises stützt der Energiespeicher des elektronischen Schutzschalters eine Betriebsspannung U_{A} der Last. Entsprechend kann der Energiespeicher auch von dem elektronischen Schutzschalter separat in die Last integriert sein. Das Stützen reduziert einen Spannungsabfall zwischen der Spannungsquelle und dem elektronischen Schutzschalter. Der reduzierte Spannungsabfall ist geringer als eine Zündspannung des insbesondere seriellen Störlichtbogens.

In vorteilhafter Weiterbildung ist der Grenzwert für die Entladezeit so gewählt, dass das Stellglied noch vor Entstehung eines insbesondere seriellen Störlichtbogens in den offenen Zustand geschaltet wird. Konkret wird der Grenzwert so gewählt, dass die vor der Entstehung des insbesondere seriellen Störlichtbogens einsetzende Entladung bereits den Grenzwert überschreitet.

In vorteilhafter Weiterbildung ist der Energiespeicher ein Kondensator oder ein Akku. Der Kondensator kann als ein Superkondensator oder ein Elektrolytkondensator vorgesehen sein. Der Akku kann auch als eine Batterie vorgesehen sein.

Vorteilhaft umfasst der elektronische Schutzschalter einen DC/DC-Wandler, der zwischen dem Energiespeicher und dem Strompfad angeordnet ist. Der DC/DC-Wandler entkoppelt die Betriebsspannung Uₑ des Energiespeichers von der Versorgungsspannung U_{S} der Spannungsquelle. Der DC/DC-Wandler kann einen breiten Arbeitsbereich aufweisen. Der breite Arbeitsbereich ermöglicht ein besseres Nutzen einer von dem Energiespeicher gespeicherten elektrischen Energie.

Zweckmäßig weist der elektronische Schutzschalter eine Energieverwaltungseinheit auf, die zwischen dem Energiespeicher und dem Strompfad angeordnet ist. Insbesondere ist die Energieverwaltungseinheit so ausgelegt, dass sie ein Entladen des Energiespeichers zulässt, wenn eine Differenz zwischen der insbesondere mittels eines Umsetzfaktors normierten Betriebsspannung Uₑ des Energiespeichers und der Spannung Uᵢₙ am Eingang größer als ein oberer Differenzschwellwert ist.

Für das Entladen muss also die normierte Betriebsspannung des Energiespeichers um den oberen Differenzschwellwert größer sein als die Spannung am Eingang des elektronischen Schutzschalters, d.h. die Eingangsspannung des elektronischen Schutzschalters. Der obere Differenzschwellwert kann beispielsweise 2V betragen. Anders gesagt startet die Energieverwaltungseinheit die Entladung des Energiespeichers nur bei einem relevanten Absinken der Eingangsspannung.

Der Umsetzfaktor hat den Wert 1, wenn die Betriebsspannung des Energiespeichers gleich der Spannung am Eingang des elektronischen Schutzschalters ist. Wenn die Betriebsspannung des Energiespeichers von der Spannung am Eingang des elektronischen Schutzschalters abweicht, hat der Umsetzfaktor einen von 1 verschiedenen Wert. Der DC/DC-Wandler kann die Spannung am Eingang des elektronischen Schutzschalters beispielsweise in eine doppelt so hohe Betriebsspannung des Energiespeichers umsetzen. In diesem Fall ist die tatsächliche Betriebsspannung des Energiespeichers rechnerisch zu halbieren, d.h. durch einen Umsetzfaktor 2 zu teilen. Der Umsetzfaktor entspricht insbesondere dem Faktor, um den der DC/DC-Wandler die Spannung am Eingang des elektronischen Schutzschalters skaliert. Der Umsetzfaktor entspricht insbesondere dem Quotienten aus der Betriebsspannung des Energiespeichers und der Spannung am Eingang des elektronischen Schutzschalters im normalen Betrieb.

Bevorzugt ist die Energieverwaltungseinheit so ausgelegt, dass sie ein Entladen des Energiespeichers sperrt, wenn die Differenz zwischen der insbesondere mittels eines Umsetzfaktors normierten Betriebsspannung Uₑ des Energiespeichers und der Spannung Uᵢₙ am Eingang kleiner als ein unterer Differenzschwellwert ist. Für das Entladen muss die normierte Betriebsspannung des Energiespeichers also mindestens um den unteren Differenzschwellwert größer sein als die Eingangsspannung des elektronischen Schutzschalters. Der untere Differenzschwellwert kann beispielsweise 0,3V betragen. Anders gesagt stoppt die Energieverwaltungseinheit die Entladung des Energiespeichers, wenn die Betriebsspannung des Energiespeichers infolge der Entladung nahezu die Eingangsspannung erreicht.

Insbesondere lässt die Energieverwaltungseinheit ein Entladen des Energiespeichers zu, solange die Differenz zwischen einer Versorgungsspannung U_{S} des Stromkreises und der Eingangsspannung Uᵢₙ des elektronischen Schutzschalters kleiner als ein Störlichtbogengrenzwert U_{SLBmin} ist. Der Störlichtbogengrenzwert U_{SLBmin} kann der Summe aus einem Offsetwert U_{offset} und dem Spannungsverlustwert des Spannungsverlusts zwischen einer die Versorgungsspannung erzeugenden Spannungsquelle und dem Eingang entsprechen, wobei der Offsetwert insbesondere von 10V bis 14V beträgt. Der Spannungsverlustwert entspricht dem Spannungsabfall an einer elektrischen Leitung mit dem Leitungswiderstand R_{W} zwischen der Spannungsquelle und dem elektronischen Schutzschalter, d. h. U_{SLBmin} = Rw Iᵢₙ. + U_{offset}, wobei Iᵢₙ den Eingangsstrom des elektronischen Schutzschalters bezeichnet. Der Leitungswiderstand R_{W} kann gemessen oder geschätzt sein.

Zweckmäßig ist das Ladungssignal eine Betriebsspannung des Energiespeichers oder ein Entladestrom des Energiespeichers. Die Betriebsspannung Uₑ oder der Entladestrom iₑ können von der Steuereinheit auf einfache Weise ermittelt werden.

In einer vorteilhaften Weiterbildung beträgt der Grenzwert für die Entladezeit von 5 ms bis 25 ms, insbesondere von 10 ms bis 20 ms. Grenzwerte in dem angegebenen Bereich bewähren sich in der Praxis.

Eine erfindungsgemäße Schaltungsanordnung umfasst eine Spannungsquelle und eine Last. Die Spannungsquelle ist beispielsweise als ein Gleichspannungsnetzteil oder ein Bus eines Gleichspannungsnetzes ausgebildet. Die Last kann auch als elektrischer Verbraucher oder ohmscher Verbraucher bezeichnet werden.

Nach der Erfindung umfasst die Schaltungsanordnung einen elektronischen Schutzschalter nach einer Ausführungsform der Erfindung. Der elektronische Schutzschalter ist bevorzugt in einer unmittelbaren Nähe zu der Last angeordnet. Der Eingang des elektronischen Schutzschalters ist mit der Spannungsquelle verbunden. Der Ausgang des elektronischen Schutzschalters ist mit der Last verbunden. Insbesondere ist der elektronische Schutzschalter entlang einer von der Spannungsquelle zu der Last verlaufenden Verbindungsleitung näher an der Last als an der Spannungsquelle angeordnet. Vorteilhaft ist ein entlang der Verbindungsleitung gemessener Abstand zwischen der Spannungsquelle und dem Eingang mindestens doppelt so groß wie ein entlang der Verbindungsleitung gemessener Abstand zwischen dem Ausgang und der Last. Der elektronische Schutzschalter kann in einer Weiterbildung eine Mehrzahl von Eingängen, eine Mehrzahl von Energiespeichern, eine Mehrzahl von Stellgliedern und eine Mehrzahl von Ausgängen umfassen, d.h. mehrkanalig ausgebildet sein. Der elektronische Schutzschalter verhindert während eines bestimmungsgemäßen Betriebs des Stromkreises ein Entstehen eines insbesondere seriellen Störlichtbogens in dem Stromkreis, wodurch die elektrische Leitung und/oder die Last vor einer Schädigung oder einer Zerstörung durch den insbesondere seriellen Störlichtbogen geschützt ist.

In einer Ausführungsform umfasst die Schaltungsanordnung eine die Spannungsquelle und die Last verbindende elektrische Leitung und ist der elektronische Schutzschalter in einem von der Spannungsquelle abgewandten Endabschnitt der elektrischen Leitung angeordnet. Abweichend von herkömmlichen elektronischen Schutzschaltern ist der erfindungsgemäße elektronische Schutzschalter von der Spannungsquelle aus gesehen hinter der elektrischen Leitung als zu schützende Komponente des Stromkreises angeordnet. Insbesondere ist der elektronische Schutzschalter entlang der elektrischen Leitung näher zur Last als zur Spannungsquelle angeordnet. Vorteilhaft ist der elektronische Schutzschalter in einem entlang der elektrischen Leitung am weitesten von der Spannungsquelle entfernt liegenden Viertel der elektrischen Leitung angeordnet.

In einer vorteilhaften Weiterbildung umfasst die Schaltungsanordnung einen übergeordneten elektronischen Schutzschalter, der zwischen der Spannungsquelle und dem elektronischen Schutzschalter angeordnet ist. Der übergeordnete elektronische Schutzschalter ist bevorzugt in einer unmittelbaren Nähe zu der Spannungsquelle angeordnet. Insbesondere ist der übergeordnete elektronische Schutzschalter entlang der Verbindungsleitung näher an der Spannungsquelle angeordnet als der elektronische Schutzschalter. Günstigerweise ist der übergeordnete elektronische Schutzschalter in die Spannungsquelle integriert.

Die Steuereinheit sendet bei Überschreiten des Grenzwerts für die Entladezeit, insbesondere anstatt das Stellglied in den offenen Zustand zu schalten, ein Trennsignal zur Aktivierung des übergeordneten elektronischen Schutzschalters an den übergeordneten elektronischen Schutzschalter. Dadurch wird der elektronische Schutzschalter durch den übergeordneten Schutzschalter von der Spannungsquelle getrennt. Der elektronische Schutzschalter und der übergeordnete Schutzschalter bilden zusammen ein kaskadiertes Schutzsystem. Die beiden elektronischen Schutzschalter sind in gegenüberliegenden Endabschnitten der elektrischen Leitung zwischen der Spannungsquelle und der Last angeordnet. Der elektronische Schutzschalter löst den übergeordneten elektronischen Schutzschalter aus. Während der erfindungsgemäße elektronische Schutzschalter die elektrische Leitung und/oder die Last vor insbesondere seriellen Störlichtbögen schützt, schützt der übergeordnete elektronische Schutzschalter die elektrische Leitung und/oder die Last vor insbesondere parallelen Störlichtbögen (PSLB). Insbesondere bietet der übergeordnete elektronische Schutzschalter auch Schutz vor einer Überlast, einem Kurzschluss oder einem Erdschluss.

Alternativ kann die Steuereinheit einen Chopper des elektronischen Schutzschalters aktivieren. Der elektronische Schutzschalter veranlasst den Chopper, einen Kurzschluss zu erzeugen. Der übergeordnete elektronische Schutzschalter detektiert den von dem Chopper erzeugten Kurzschluss und trennt daraufhin zwangsläufig die elektrische Leitung von der Spannungsquelle. Im Zusammenwirken mit dem übergeordneten elektronischen Schutzschalter bietet der elektronische Schutzschalter infolgedessen Schutz auch vor solchen parallelen Störlichtbögen, die von dem übergeordneten elektronischen Schutzschalter allein nicht detektiert werden.

Ein erfindungsgemäßes Verfahren zum Verhindern eines insbesondere seriellen Störlichtbogens in einem Stromkreis mittels eines elektronischen Schutzschalters, wobei der elektronische Schutzschalter einen Strompfad aufweist, der in den Stromkreis eingeschleift ist, weist die folgenden Schritte auf:

Nach der Erfindung wird ein Ladungssignal überwacht, dessen Änderung mit einer Ladungsänderung eines geladenen Energiespeichers des elektronischen Schutzschalters korreliert. Bei einer anhand des Ladungssignals detektierten Entladung des Energiespeichers bei geschlossenem Zustand des Strompfads wird eine Entladezeit, während derer der Energiespeicher ununterbrochen entladen wird, bestimmt, insbesondere gemessen. Vorteilhaft erfolgt die Detektion der Entladung durch eine Steuereinheit. Zweckmäßig erfolgt die Bestimmung, insbesondere die Messung, der Entladezeit mittels der Steuereinheit. Bei einem Überschreiten eines Grenzwerts für die Entladezeit wird der Strompfad geöffnet. Zweckmäßig bewirkt die Steuereinheit die Öffnung des Strompfads. Insbesondere ist in dem Strompfad ein Stellglied angeordnet, dass zum Öffnen des Strompfads geöffnet werden kann, so der Laststrom das Stellglied nicht passieren kann. Durch die Öffnung des Strompfads wird die Entstehung eines insbesondere seriellen Störlichtbogens in dem Stromkreis verhindert. Mit dem Verfahren wird eine mit dem Eingang des elektronischen Schutzschalters verbundene elektrische Leitung und/oder eine mit einem Ausgang des elektronischen Schutzschalters verbundene Last vor einer Schädigung oder einer Zerstörung durch den insbesondere seriellen Störlichtbogen geschützt.

Ein Ausführungsbeispiel der Erfindung wird im Folgenden anhand der Zeichnung erläutert. Es zeigen:
- Fig. 1: eine Schaltungsanordnung aus dem Stand der Technik,
- Fig. 2: die in Fig. 1 gezeigte Schaltungsanordnung mit einem seriellen Störlichtbogen,
- Fig. 3: einen Schaltplan eines erfindungsgemäßen elektronischen Schutzschalters,
- Fig. 4: eine erfindungsgemäße Schaltungsanordnung;
- Fig. 5: die in Fig. 4 gezeigte Schaltungsanordnung mit Störlichtbögen.

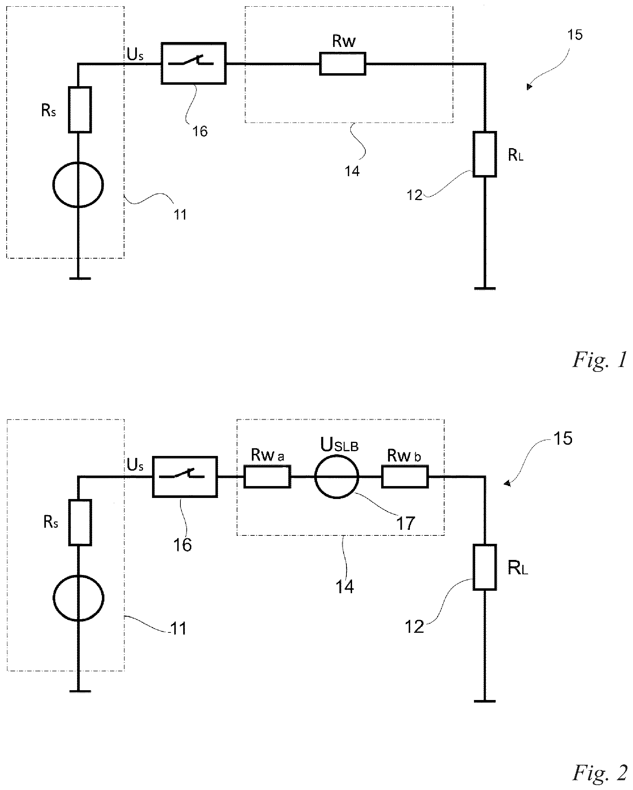

Fig. 1 zeigt eine bekannte Schaltungsanordnung 15. Die Schaltungsanordnung 15 umfasst eine Spannungsquelle 11, eine elektrische Leitung 14, einen herkömmlichen elektronischen Schutzschalter 16 und eine Last 12. Der herkömmliche elektronische Schutzschalter 16 ist in einem der Spannungsquelle 11 zugewandten Endabschnitt der elektrischen Leitung 14 angeordnet. Die Spannungsquelle 11 weist einen Innenwiderstand R_{S} auf und stellt eine Versorgungsspannung U_{S} bereit. Für den Innenwiderstand ist auch das Formelzeichen Rᵢ gebräuchlich. Die elektrische Leitung 14 weist einen Leitungswiderstand R_{W} auf. Die Last 12 weist einen Lastwiderstand R_{L} auf. Im bestimmungsgemäßen Betrieb der Schaltungsanordnung 15 ist der elektronische Schutzschalter 16 in einem geschlossenen Zustand und verbindet die Last 12 mit der Spannungsquelle 11 und lässt einen Laststrom passieren.

Fig. 2 zeigt die in Fig. 1 gezeigte Schaltungsanordnung 15 mit einem seriellen Störlichtbogen 17, der beispielsweise infolge eines Bruchs der elektrischen Leitung 14 entstanden ist. Die Stelle des Bruchs teilt den Leitungswiderstand R_{W} in einen ersten Leitungsteilwiderstand R_{Wa} zwischen der Spannungsquelle 11 und der Bruchstelle und einen zweiten Leitungsteilwiderstand R_{Wb} zwischen der Bruchstelle und dem elektronischen Schutzschalter 16, wobei R_{W} = R_{Wa} + R_{Wb} gilt. An der Bruchstelle fällt eine den seriellen Störlichtbogen 17 aufrechterhaltende Störlichtbogenspannung U_{SLB} ab. Der herkömmliche elektronische Schutzschalter 16 detektiert die Störlichtbogenspannung U_{SLB} und infolgedessen den seriellen Störlichtbogen 17 nicht. Infolgedessen geht der Schutzschalter 16 nicht in einen offenen Zustand über und trennt die Last 12 nicht von der Spannungsquelle 11. Der weiterhin den elektronischen Schutzschalter 16 passierende und von dem seriellen Störlichtbogen 17 modulierte Laststrom kann zu einem Schaden der elektrischen Leitung 14 oder der Last 12 oder sogar zu einer Zerstörung der elektrischen Leitung 14 oder der Last 12 führen. Abgesehen davon kann der serielle Störlichtboten 17 einen Brand verursachen.

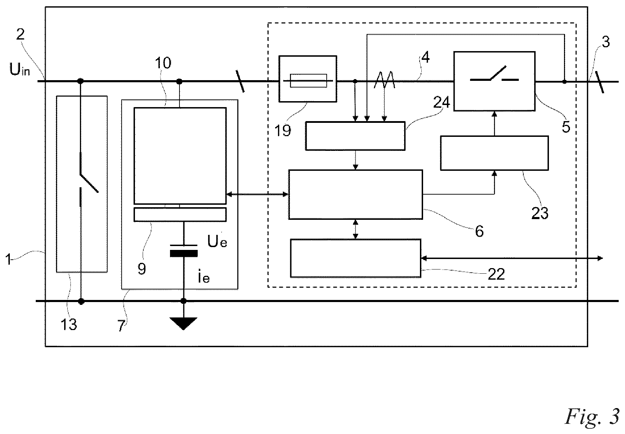

Fig. 3 zeigt einen erfindungsgemäßen elektronischen Schutzschalter 1. Der erfindungsgemäße elektronische Schutzschalter 1 kann statt des herkömmlichen elektronischen Schutzschalters 16 in der in den Figuren 1 und 2 dargestellten Schaltungsanordnung 15 angeordnet werden. Die Beschreibung zu den Figuren 1 und 2 trifft daher auch auf eine erfindungsgemäße Schaltungsanordnung zu. Der erfindungsgemäße elektronische Schutzschalter 1 weist einen Eingang 2 und einen Ausgang 3 auf. Zwischen dem Eingang 2 und dem Ausgang 3 verläuft ein Strompfad 4 für einen Laststrom. Der Laststrom kann ein Gleichstrom sein. Eine an dem Eingang 2 anliegende Eingangsspannung ist mit Uᵢₙ bezeichnet.

In dem Strompfad 4 ist ein Stellglied 5 angeordnet. Das Stellglied 5 besitzt einen geschlossenen Zustand und einen offenen Zustand. Im offenen Zustand ist der Strompfad 4 geöffnet und sperrt den Laststrom. Im geschlossenen Zustand ist der Strompfad 4 geschlossen und lässt den Laststrom passieren. Das Stellglied 5 dient zum Unterbrechen und Schließen des Strompfads 4.

Der elektronische Schutzschalter 1 umfasst eine Steuereinheit 6. Die Steuereinheit 6 ist dazu ausgebildet, das Stellglied 5 zwischen dem offenen Zustand und dem geschlossenen Zustand zu schalten.

Der elektronische Schutzschalter 1 umfasst einen Energiespeicher 7, der elektrisch mit dem Strompfad 4 verbunden ist. Der Energiespeicher 7 kann ein Kondensator oder ein Akku sein. Eine von dem Energiespeicher 7 bereitgestellte Betriebsspannung ist mit Uₑ bezeichnet. Ein bei einer Ladungsänderung des Energiespeichers 7 fließender Strom ist mit iₑ bezeichnet. Der elektronische Schutzschalter 1 ist so ausgelegt, dass eine Entladung und/oder Ladung des Energiespeichers 7 im bestimmungsgemäßen Betrieb des elektronischen Schutzschalters 1, insbesondere bei geschlossenem Strompfad 4, insbesondere wenn das Stellglied 5 sich im geschlossenen Zustand befindet, möglich ist.

Der elektronische Schutzschalter 1 ist so ausgelegt, dass bei Anordnung des elektronischen Schutzschalters 1 in einem Stromkreis 8 zur Durchleitung des Laststroms durch den Strompfad 4 der Steuereinheit 6 ein Ladungssignal übermittelt wird, dessen Änderung mit einer Ladungsänderung des geladenen Energiespeichers 7 korreliert. Das Ladungssignal kann eine Betriebsspannung des Energiespeichers 7 oder ein Entladestrom des Energiespeichers 7 sein. Das Ladungssignal wird während des bestimmungsgemäßen Betriebs des elektronischen Schutzschalters 1, also bei Versorgung der Last mit dem Laststrom, überwacht. Insbesondere wird das Ladungssignal permanent überwacht.

Der elektronische Schutzschalter 1 ist weiterhin so ausgelegt, dass die Steuereinheit 6 bei einer anhand des Ladungssignals detektierten Entladung des Energiespeichers 7 im geschlossenen Zustand des Stellglieds 5 eine Entladezeit bestimmt, im Ausführungsbeispiel misst, während derer der Energiespeicher 7 ununterbrochen entladen wird, und dass die Steuereinheit 6 bei Überschreiten eines Grenzwerts für die Entladezeit das Stellglied 5 in den offenen Zustand schaltet.

Der Grenzwert für die Entladezeit wird insbesondere so gewählt, dass das Stellglied 5 noch vor Entstehung eines insbesondere seriellen Störlichtbogens in den offenen Zustand geschaltet wird. Konkret kann der Grenzwert für die Entladezeit von 5 ms bis 25 ms, insbesondere von 10 ms bis 20 ms betragen. Dadurch wird die Entstehung eines insbesondere seriellen Störlichtbogens in dem Stromkreis 8 verhindert.

Zudem kann die Entstehung des insbesondere seriellen Störlichtbogens bei geschlossenem Zustand des Stellglieds 5 durch die Entladung des Energiespeichers 7 verhindert werden.

Der elektronische Schutzschalter 1 kann so ausgelegt sein, dass die Steuereinheit 6 ununterbrochen das Ladungssignal überwacht und für den Fall einer Entladung des Energiespeichers 7 die Entladezeit bestimmt, insbesondere misst.

Ferner kann der elektronische Schutzschalter 1 einen DC-DC-Wandler 9 umfassen, der zwischen dem Energiespeicher 7 und dem Strompfad 4 angeordnet ist.

Der elektronische Schutzschalter 1 weist insbesondere eine Energieverwaltungseinheit 10 auf, die zwischen dem Energiespeicher 7 und dem Strompfad 4 angeordnet ist. Die Energieverwaltungseinheit 10 kann so ausgelegt sein, dass sie ein Entladen des Energiespeichers 7 zulässt, wenn eine Differenz zwischen der Betriebsspannung des Energiespeichers 7 und der insbesondere mittels eines Umsetzfaktors normierten Eingangsspannung am Eingang 2 größer als ein oberer Differenzschwellwert ist. Die Energieverwaltungseinheit 10 kann weiterhin so ausgelegt sein, dass sie ein Entladen des Energiespeichers 7 sperrt, wenn die Differenz zwischen der insbesondere mittels eines Umsetzfaktors normierten Betriebsspannung des Energiespeichers 7 und der Eingangsspannung am Eingang 2 kleiner als ein unterer Differenzschwellwert ist. Insbesondere lässt der DC/DC-Wandler ein Entladen des Energiespeichers 7 im bestimmungsgemäßen Betrieb des elektronischen Schutzschalters 1, insbesondere bei geschlossenem Strompfad 4 zu.

Insbesondere lässt die Energieverwaltungseinheit 10 ein Entladen des Energiespeichers 7 zu, solange die Differenz zwischen einer Versorgungsspannung des Stromkreises 8 und der Eingangsspannung des elektronischen Schutzschalters 1 kleiner als ein Störlichtbogengrenzwert ist. Der Störlichtbogengrenzwert entspricht idealerweise der Summe aus einem Offsetwert und dem Spannungsverlustwert des Spannungsverlusts zwischen einer die Versorgungsspannung erzeugenden Spannungsquelle 11 und dem Eingang 2. Der Offsetwert beträgt insbesondere von 10V bis 14V.

Zu dem elektronischen Schutzschalter 1 können auch ein Chopper 13 und/oder eine Sicherung 19 gehören. Die Sicherung 19 kann vorgesehen sein, um eine geltende Sicherheitsnorm zu erfüllen.

Der elektronische Schutzschalter 1 kann zudem ein Kommunikationsmodul 22 und/oder ein Messmodul 24 umfassen, die funktional mit der Steuereinheit 6 verbunden sind. Das Kommunikationsmodul 22 ist ausgebildet, einen Zustand des elektronischen Schutzschalters 1 und/oder des Stromkreises 8 an ein (nicht dargestelltes) zentrales Steuerungssystem zu übermitteln. Das Messmodul 23 ist ausgebildet, mittels eines Messens einer Stromstärke des Laststroms oder einer Eingangsspannung Uᵢₙ einen Zustand des Stromkreises 8 zu erfassen. Der elektronische Schutzschalter 1 kann ferner ein Ansteuerungsmodul 23 umfassen, dass mit der Steuereinheit 6 und dem Stellglied 5 funktional verbunden ist. Das Ansteuerungsmodul 23 ist ausgebildet, abhängig von einem Signal der Steuereinheit 6 das Stellglied 5 zu öffnen bzw. zu schließen.

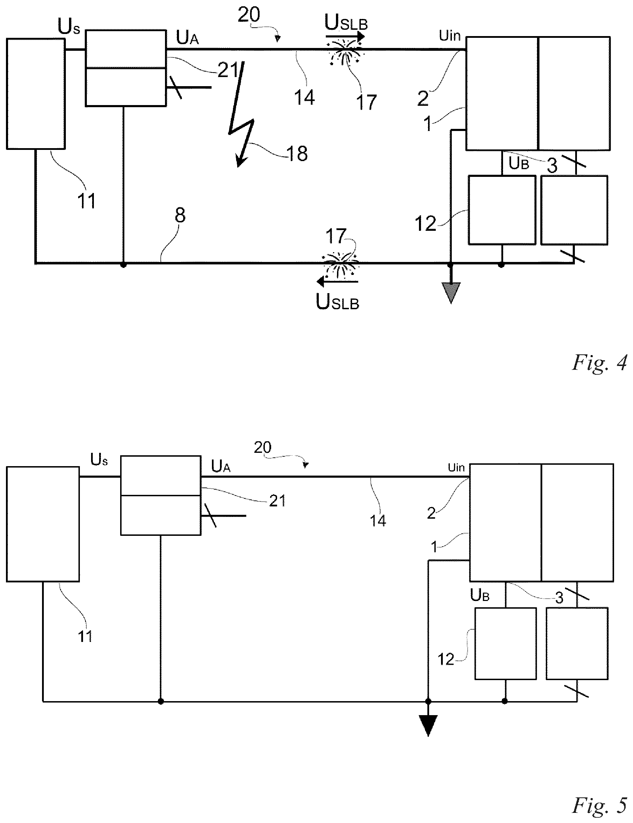

Fig. 4 zeigt eine erfindungsgemäße Schaltungsanordnung 20. Die Schaltungsanordnung 20 umfasst eine Spannungsquelle 11 und eine Last 12. Die Schaltungsanordnung 20 umfasst ferner den in Fig. 3 gezeigten elektronischen Schutzschalter 1. Der Eingang 2 des elektronischen Schutzschalters 1 ist mit der Spannungsquelle 11 über eine elektrische Leitung verbunden. Der Ausgang 3 des elektronischen Schutzschalters 1 ist mit der Last 12 verbunden. Der elektronische Schutzschalter 1 kann in einem von der Spannungsquelle 11 abgewandten Endabschnitt der elektrischen Leitung angeordnet sein. Insbesondere ist der elektronische Schutzschalter 1 entlang der elektrischen Leitung näher zur Last 12 als zur Spannungsquelle 11 angeordnet. Vorteilhaft ist der elektronische Schutzschalter 1 in einem entlang der elektrischen Leitung am weitesten von der Spannungsquelle 11 entfernt liegenden Viertel der elektrischen Leitung angeordnet.

Die Schaltungsanordnung 20 umfasst weiterhin einen übergeordneten elektronischen Schutzschalter 21, der als herkömmlicher elektronischer Schutzschalter 16 (siehe Figuren 1 und 2) ausgebildet sein kann und zwischen der Spannungsquelle 11 und dem elektronischen Schutzschalter 1 angeordnet ist. Der übergeordnete elektronische Schutzschalter 21 kann in einem der Spannungsquelle 11 zugewandten Endabschnitt der elektrischen Leitung angeordnet sein. Insbesondere ist der übergeordnete übergeordnete elektronische Schutzschalter 21 entlang der elektrischen Leitung näher zur Spannungsquelle 11 als zur Last 12 angeordnet. Vorteilhaft ist der übergeordnete elektronische Schutzschalter 21 in einem entlang der elektrischen Leitung am weitesten von der Last 12 entfernt liegenden Viertel der elektrischen Leitung angeordnet. Die Steuereinheit 6 kann bei Überschreiten des Grenzwerts für die Entladezeit, insbesondere anstatt das Stellglied 5 in den offenen Zustand zu schalten, ein Trennsignal zur Aktivierung des übergeordneten elektronischen Schutzschalters 21 an den übergeordneten elektronischen Schutzschalter 21 senden, wodurch der elektronische Schutzschalter 1 durch den übergeordneten Schutzschalter 21 von der Spannungsquelle 11 getrennt wird.

Alternativ oder zusätzlich aktiviert die Steuereinheit 6, insbesondere anstatt das in Fig. 3 dargestellte Stellglied 5 in den offenen Zustand zu schalten, den Chopper 13 des elektronischen Schutzschalters 1, wodurch der übergeordnete elektronische Schutzschalter 21 einen Überlastfall detektiert und den elektronischen Schutzschalter 1 von der Spannungsquelle 11 trennt.

Mittels des elektronischen Schutzschalters 1, dessen Strompfad 4 in den Stromkreis 8 eingeschleift ist, wird ein insbesondere serieller Störlichtbogen in dem Stromkreis 8 in einem Verfahren wie folgt verhindert.

Ein Ladungssignal wird überwacht, dessen Änderung mit einer Ladungsänderung des geladenen Energiespeichers 7 des elektronischen Schutzschalters 1 korreliert. Im Ausführungsbeispiel erfolgt die Überwachung wie vorstehend beschrieben durch die Steuereinheit 6.

Bei einer anhand des Ladungssignals detektierten Entladung des Energiespeichers 7 bei geschlossenem Zustand des Strompfads 4 wird eine Entladezeit bestimmt, insbesondere gemessen, während derer der Energiespeicher 7 ununterbrochen entladen wird. Die Bestimmung, insbesondere die Messung der Entladezeit erfolgt im Ausführungsbeispiel durch die Steuereinheit 6.

Bei einem Überschreiten des Grenzwerts für die Entladezeit wird der Strompfad 4 geöffnet, wodurch die Entstehung eines insbesondere seriellen Störlichtbogens in dem Stromkreis 8 verhindert wird. Im Ausführungsbeispiel wird die Öffnung des Strompfads 4 durch die Steuereinheit 6 bewirkt. Wie vorstehend beschrieben wird hierzu vorteilhaft das Stellglied 5 in den offenen Zustand überführt.

Zudem kann die Entstehung eines Störlichtbogens, insbesondere eines seriellen Störlichtbogens, durch die Entladung des Energiespeichers 7 verhindert werden.

Fig. 5 zeigt die in Fig. 4 gezeigte Schaltungsanordnung 20. Die Schaltungsanordnung 20 schützt dank dem elektronischen Schutzschalter 1 die elektrischen Leitung 14 und/oder die Last 12 vor seriellen Störlichtbögen 17 in der elektrischen Leitung 14, sowohl in einer Hinleitung als auch in einer Rückleitung, oder vor einem parallelen Störlichtbogen 18 zwischen der Hinleitung und der Rückleitung. Die seriellen Störlichtbögen 17 gehen jeweils mit einer Störlichtbogenspannung U_{SLB} einher. Der elektronische Schutzschalter 1 verhindert ein Entstehen der seriellen Störlichtbögen 17, indem er die Last 12 von der Spannungsquelle 11 trennt. Der übergeordnete elektronische Schutzschalter 21 detektiert auch den parallelen Störlichtbogen 18 und veranlasst den übergeordneten elektronischen Schutzschalter 21 zum Trennen der elektrischen Leitung 14 von der Spannungsquelle 11, wodurch der parallele Störlichtbogen 18 gelöscht wird.

## Patentansprüche

1. Elektronischer Schutzschalter mit einem Eingang (2) und einem Ausgang (3), wobei zwischen dem Eingang (2) und dem Ausgang (3) ein Strompfad (4) für einen Laststrom verläuft, wobei in dem Strompfad (4) ein Stellglied (5) angeordnet ist, das einen geschlossenen Zustand und einen offenen Zustand besitzt, wobei im offenen Zustand der Strompfad (4) geöffnet ist und den Laststrom sperrt, wobei im geschlossenen Zustand der Strompfad (4) geschlossen ist und den Laststrom passieren lässt, wobei der elektronische Schutzschalter (1) eine Steuereinheit (6) umfasst, die dazu ausgebildet ist, das Stellglied (5) zwischen dem offenen Zustand und dem geschlossenen Zustand zu schalten,
**dadurch gekennzeichnet, dass** der elektronische Schutzschalter (1) einen Energiespeicher (7) umfasst, der elektrisch mit dem Strompfad (4) verbunden ist, dass der elektronische Schutzschalter (1) so ausgelegt ist, dass bei Anordnung des elektronischen Schutzschalters (1) in einem Stromkreis (8) zur Durchleitung des Laststroms durch den Strompfad (4)
- der Steuereinheit (6) ein Ladungssignal übermittelt wird, dessen Änderung mit einer Ladungsänderung des geladenen Energiespeichers (7) korreliert,
- die Steuereinheit (6) bei einer anhand des Ladungssignals detektierten Entladung des Energiespeichers (7) im geschlossenen Zustand des Stellglieds (5) eine Entladezeit misst, während derer der Energiespeicher (7) ununterbrochen entladen wird und
- die Steuereinheit (6) bei Überschreiten eines Grenzwerts für die Entladezeit das Stellglied (5) in den offenen Zustand schaltet, wodurch die Entstehung eines Störlichtbogens in dem Stromkreis (8) verhindert wird.

2. Elektronischer Schutzschalter nach Anspruch 1,
**dadurch gekennzeichnet, dass** der elektronische Schutzschalter (1) so ausgelegt ist, dass die Steuereinheit (6) ununterbrochen das Ladungssignal überwacht und für den Fall einer Entladung des Energiespeichers (7) die Entladezeit bestimmt.

3. Elektronischer Schutzschalter nach Anspruch 1 oder 2,
**dadurch gekennzeichnet, dass** der Laststrom ein Gleichstrom ist.

4. Elektronischer Schutzschalter nach einem der Ansprüche 1 bis 3,
**dadurch gekennzeichnet, dass** die Entstehung des Störlichtbogens bei geschlossenem Zustand des Stellglieds (5) durch die Entladung des Energiespeichers (7) verhindert wird.

5. Elektronischer Schutzschalter nach einem der Ansprüche 1 bis 4,
**dadurch gekennzeichnet, dass** der Grenzwert für die Entladezeit so gewählt ist, dass das Stellglied (5) noch vor Entstehung eines Störlichtbogens in den offenen Zustand geschaltet wird.

6. Elektronischer Schutzschalter nach einem der Ansprüche 1 bis 5,
**dadurch gekennzeichnet, dass** der Energiespeicher (7) ein Kondensator oder ein Akku ist.

7. Elektronischer Schutzschalter nach einem der Ansprüche 1 bis 6,
**dadurch gekennzeichnet, dass** der elektronische Schutzschalter (1) einen DC-DC-Wandler (9) umfasst, der zwischen dem Energiespeicher (7) und dem Strompfad (4) angeordnet ist.

8. Elektronischer Schutzschalter nach einem der Ansprüche 1 bis 7,
**dadurch gekennzeichnet, dass** der elektronische Schutzschalter (1) eine Energieverwaltungseinheit (10) aufweist, die zwischen dem Energiespeicher (7) und dem Strompfad (4) angeordnet ist, dass die Energieverwaltungseinheit (10) so ausgelegt ist, dass sie ein Entladen des Energiespeichers (7) zulässt, wenn eine Differenz zwischen der insbesondere mittels eines Umsetzfaktors normierten Betriebsspannung des Energiespeichers (7) und der Spannung am Eingang (2) größer als ein oberer Differenzschwellwert ist.

9. Elektronischer Schutzschalter nach Anspruch 8,
**dadurch gekennzeichnet, dass** die Energieverwaltungseinheit (10) so ausgelegt ist, dass sie ein Entladen des Energiespeichers (7) sperrt, wenn die Differenz zwischen der insbesondere mittels eines Umsetzfaktors normierten Betriebsspannung des Energiespeichers (7) und der Spannung am Eingang (2) kleiner als ein unterer Differenzschwellwert ist.

10. Elektronischer Schutzschalter nach Anspruch 8 oder 9,
**dadurch gekennzeichnet, dass** die Energieverwaltungseinheit (10) ein Entladen des Energiespeichers (7) zulässt, solange die Differenz zwischen einer Versorgungsspannung des Stromkreises (8) und der Eingangsspannung des elektronischen Schutzschalters (1) kleiner als ein Störlichtbogengrenzwert ist, wobei der Störlichtbogengrenzwert der Summe aus einem Offsetwert und dem Spannungsverlustwert des Spannungsverlusts zwischen einer die Versorgungsspannung erzeugenden Spannungsquelle (11) und dem Eingang (2) entspricht, wobei der Offsetwert insbesondere von 10V bis 14V beträgt.

11. Elektronischer Schutzschalter nach einem der Ansprüche 1 bis 10,
**dadurch gekennzeichnet, dass** das Ladungssignal eine Spannung des Energiespeichers (7) oder ein Entladestrom des Energiespeichers (7) ist.

12. Elektronischer Schutzschalter nach einem der Ansprüche 1 bis 11,
**dadurch gekennzeichnet, dass** der Grenzwert für die Entladezeit von 5 ms bis 25 ms, insbesondere von 10 ms bis 20 ms beträgt.

13. Schaltungsanordnung umfassend eine Spannungsquelle (11) und eine Last (12),
**dadurch gekennzeichnet, dass** die Schaltungsanordnung (20) einen elektronischen Schutzschalter (1) nach einem der Ansprüche 1 bis 12 umfasst, dass der Eingang (2) des elektronischen Schutzschalters (1) mit der Spannungsquelle (11) verbunden ist, und dass der Ausgang (3) des elektronischen Schutzschalters (1) mit der Last (12) verbunden ist.

14. Schaltungsanordnung nach Anspruch 13,
**dadurch gekennzeichnet, dass** die Schaltungsanordnung (20) eine die Spannungsquelle (11) und die Last (12) verbindende elektrische Leitung umfasst und der elektronische Schutzschalter (1) in einem von der Spannungsquelle abgewandten Endabschnitt der elektrischen Leitung angeordnet ist.

15. Schaltungsanordnung nach Anspruch 13 oder 14,
**dadurch gekennzeichnet, dass** die Schaltungsanordnung (20) einen übergeordneten elektronischen Schutzschalter (21) umfasst, der zwischen der Spannungsquelle (11) und dem elektronischen Schutzschalter (1) angeordnet ist, und dass die Steuereinheit (6) bei Überschreiten des Grenzwerts für die Entladezeit, insbesondere anstatt das Stellglied (5) in den offenen Zustand zu schalten,
- ein Trennsignal zur Aktivierung des übergeordneten elektronischen Schutzschalters (21) an den übergeordneten elektronischen Schutzschalter (21) sendet, wodurch der elektronische Schutzschalter (1) durch den übergeordneten Schutzschalter (21) von der Spannungsquelle (11) getrennt wird oder
- einen Chopper (13) des elektronischen Schutzschalters (1) aktiviert, wodurch der übergeordnete elektronische Schutzschalter (21) einen Überlastfall detektiert und den elektronischen Schutzschalter (1) von der Spannungsquelle (11) trennt.

16. Verfahren zum Verhindern eines Störlichtbogens in einem Stromkreis (8) mittels eines elektronischen Schutzschalters (1), wobei der elektronische Schutzschalter (1) einen Strompfad aufweist, der in den Stromkreis (8) eingeschleift ist, wobei bei dem Verfahren
- ein Ladungssignal überwacht wird, dessen Änderung mit einer Ladungsänderung eines geladenen Energiespeichers (7) des elektronischen Schutzschalters (1) korreliert,
- bei einer anhand des Ladungssignals detektierten Entladung des Energiespeichers (7) bei geschlossenem Zustand des Strompfads eine Entladezeit bestimmt wird, während derer der Energiespeicher (7) ununterbrochen entladen wird, und
- bei einem Überschreiten eines Grenzwerts für die Entladezeit der Strompfad geöffnet wird, wodurch die Entstehung eines Störlichtbogens in dem Stromkreis (8) verhindert wird.

## Claims

1. Electronic circuit breaker having an input (2) and an output (3), wherein a current path (4) for a load current runs between the input (2) and the output (3), wherein an actuator (5), which has a closed state and an open state, is arranged in the current path (4), wherein, in the open state, the current path (4) is open and blocks the load current, wherein, in the closed state, the current path (4) is closed and allows the load current to pass, wherein the electronic circuit breaker (1) comprises a control unit (6) designed to switch the actuator (5) between the open state and the closed state,
**characterized in that** the electronic circuit breaker (1) comprises an energy storage device (7), which is electrically connected to the current path (4), **in that** the electronic circuit breaker (1) is designed such that, when the electronic circuit breaker (1) is arranged in a circuit (8) for conducting the load current through the current path (4),
- a charge signal is transmitted to the control unit (6), the change in which charge signal correlates to a change in charge of the charged energy storage device (7),
- if it is detected based on the charge signal that the energy storage device (7) has been discharged, the control unit (6) measures a discharge time when the actuator (5) is in the closed state, during which discharge time the energy storage device (7) is continuously discharged, and
- the control unit (6) switches the actuator (5) to the open state when a limit value for the discharge time is exceeded, thereby preventing formation of an arc fault in the circuit (8).

2. Electronic circuit breaker according to Claim 1,
**characterized in that** the electronic circuit breaker (1) is designed such that the control unit (6) continuously monitors the charge signal and determines the discharge time in the event of a discharge of the energy storage device (7).

3. Electronic circuit breaker according to Claim 1 or 2,
**characterized in that** the load current is a direct current.

4. Electronic circuit breaker according to any of Claims 1 to 3,
**characterized in that** the formation of the arc fault is prevented by discharging the energy storage device (7) when the actuator (5) is in the closed state.

5. Electronic circuit breaker according to any of Claims 1 to 4,
**characterized in that** the limit value for the discharge time is selected such that the actuator (5) is switched to the open state even before the arc fault can form.

6. Electronic circuit breaker according to any of Claims 1 to 5,
**characterized in that** the energy storage device (7) is a capacitor or a rechargeable battery.

7. Electronic circuit breaker according to any of Claims 1 to 6,
**characterized in that** the electronic circuit breaker (1) comprises a DC-DC converter (9), which is arranged between the energy storage device (7) and the current path (4).

8. Electronic circuit breaker according to any of Claims 1 to 7,
**characterized in that** the electronic circuit breaker (1) has an energy management unit (10), which is arranged between the energy storage device (7) and the current path (4),
**in that** the energy management unit (10) is designed such that it allows the energy storage device (7) to be discharged if a difference between the operating voltage of the energy storage device (7), which in particular is normalized by means of a conversion factor, and the voltage at the input (2) is greater than an upper difference threshold value.

9. Electronic circuit breaker according to Claim 8,
**characterized in that** the energy management unit (10) is designed such that it blocks the energy storage device (7) being discharged if the difference between the operating voltage of the energy storage device (7), which in particular is normalized by means of a conversion factor, and the voltage at the input (2) is less than a lower difference threshold value.

10. Electronic circuit breaker according to Claim 8 or 9,
**characterized in that** the energy management unit (10) allows the energy storage device (7) to be discharged as long as the difference between a supply voltage of the circuit (8) and the input voltage of the electronic circuit breaker (1) is less than an arc fault limit value, wherein the arc fault limit value corresponds to the sum of an offset value and the voltage loss value of the voltage loss between a voltage source (11) generating the supply voltage and the input (2), wherein the offset value is in particular from 10 V to 14 V.

11. Electronic circuit breaker according to any of Claims 1 to 10,
**characterized in that** the charge signal is a voltage of the energy storage device (7) or a discharge current of the energy storage device (7).

12. Electronic circuit breaker according to any of Claims 1 to 11,
**characterized in that** the limit value for the discharge time is from 5 ms to 25 ms, in particular from 10 ms to 20 ms.

13. Circuit arrangement comprising a voltage source (11) and a load (12),
**characterized in that** the circuit arrangement (20) comprises an electronic circuit breaker (1) according to any of Claims 1 to 12, **in that** the input (2) of the electronic circuit breaker (1) is connected to the voltage source (11), and **in that** the output (3) of the electronic circuit breaker (1) is connected to the load (12).

14. Circuit arrangement according to Claim 13,
**characterized in that** the circuit arrangement (20) comprises an electrical line connecting the voltage source (11) and the load (12), and the electronic circuit breaker (1) is arranged in an end section of the electrical line remote from the voltage source.

15. Circuit arrangement according to Claim 13 or 14,
**characterized in that** the circuit arrangement (20) comprises a higher-level electronic circuit breaker (21), which is arranged between the voltage source (11) and the electronic circuit breaker (1), and **in that** the control unit (6), when the limit value for the discharge time is exceeded, in particular instead of switching the actuator (5) into the open state,
- sends a disconnection signal for activating the higher-level electronic circuit breaker (21) to the higher-level electronic circuit breaker (21), as a result of which the electronic circuit breaker (1) is disconnected from the voltage source (11) by way of the higher-level circuit breaker (21), or
- activates a chopper (13) of the electronic circuit breaker (1), as a result of which the higher-level electronic circuit breaker (21) detects an overload situation and disconnects the electronic circuit breaker (1) from the voltage source (11).

16. Method for preventing an arc fault in a circuit (8) by means of an electronic circuit breaker (1), wherein the electronic circuit breaker (1) has a current path looped into the circuit (8), wherein, in the method,
- a charge signal is monitored, the change in which correlates to a change in charge of a charged energy storage device (7) of the electronic circuit breaker (1),
- if it is detected based on the charge signal that the energy storage device (7) has been discharged, a discharge time is determined when the current path is in the closed state, during which discharge time the energy storage device (7) is continuously discharged, and
- the current path is opened when a limit value for the discharge time is exceeded, thereby preventing formation of an arc fault in the circuit (8).

## Revendications

1. Disjoncteur électronique comprenant une entrée (2) et une sortie (3), un trajet de courant (4) pour un courant de charge s'étendant entre l'entrée (2) et la sortie (3), un actionneur (5) étant disposé dans le trajet de courant (4) et possédant un état fermé et un état ouvert, dans lequel, dans l'état ouvert, le trajet de courant (4) est ouvert et empêche le courant de charge de passer, tandis que dans l'état fermé, le trajet de courant (4) est fermé et laisse passer le courant de charge, le disjoncteur électronique (1) comprenant une unité de commande (6) configurée pour commuter l'actionneur (5) entre l'état ouvert et l'état fermé,
**caractérisé en ce que** le disjoncteur électronique (1) comprend un accumulateur d'énergie (7) qui est relié électriquement au trajet de courant (4), **en ce que** le disjoncteur électronique (1) est conçu de telle sorte que, lorsque le disjoncteur électronique (1) est disposé dans un circuit (8) de manière à laisser passer le courant de charge à travers le trajet de courant (4),
- un signal de charge est transmis à l'unité de commande (6), la modification dudit signal de charge étant corrélée à une modification de charge de l'accumulateur d'énergie (7) chargé,
- l'unité de commande (6) mesure, lors d'une décharge de l'accumulateur d'énergie (7) détectée sur la base du signal de charge à l'état fermé de l'actionneur (5), un temps de décharge pendant lequel l'accumulateur d'énergie (7) est déchargé sans interruption, et
- l'unité de commande (6) commute l'actionneur (5) à l'état ouvert lorsque le temps de décharge dépasse une valeur limite, ce par quoi la formation d'un arc électrique parasite dans le circuit (8) est empêchée.

2. Disjoncteur électronique selon la revendication 1,
**caractérisé en ce que** le disjoncteur électronique (1) est conçu de telle sorte que l'unité de commande (6) surveille sans interruption le signal de charge et détermine le temps de décharge en cas de décharge de l'accumulateur d'énergie (7).

3. Disjoncteur électronique selon la revendication 1 ou 2,
**caractérisé en ce que** le courant de charge est un courant continu.

4. Disjoncteur électronique selon l'une des revendications 1 à 3,
**caractérisé en ce que** la formation de l'arc électrique parasite à l'état fermé de l'actionneur (5) est empêchée par la décharge de l'accumulateur d'énergie (7).

5. Disjoncteur électronique selon l'une des revendications 1 à 4,
**caractérisé en ce que** la valeur limite du temps de décharge est choisie de telle sorte que l'actionneur (5) soit commuté à l'état ouvert avant même la formation d'un arc électrique parasite.

6. Disjoncteur électronique selon l'une des revendications 1 à 5,
**caractérisé en ce que** l'accumulateur d'énergie (7) est un condensateur ou un accumulateur.

7. Disjoncteur électronique selon l'une des revendications 1 à 6,
**caractérisé en ce que** le disjoncteur électronique (1) comprend un convertisseur continu-continu (9) qui est disposé entre l'accumulateur d'énergie (7) et le trajet de courant (4).

8. Disjoncteur électronique selon l'une des revendications 1 à 7,
**caractérisé en ce que** le disjoncteur électronique (1) présente une unité de gestion d'énergie (10) qui est disposée entre l'accumulateur d'énergie (7) et le trajet de courant (4), **en ce que** l'unité de gestion d'énergie (10) est conçue de telle sorte qu'elle autorise une décharge de l'accumulateur d'énergie (7) si une différence entre la tension de fonctionnement de l'accumulateur d'énergie (7), normalisée notamment au moyen d'un facteur de conversion, et la tension à l'entrée (2) est supérieure à une valeur seuil de différence supérieure.

9. Disjoncteur électronique selon la revendication 8,
**caractérisé en ce que** l'unité de gestion d'énergie (10) est conçue de telle sorte qu'elle bloque la décharge de l'accumulateur d'énergie (7) lorsque la différence entre la tension de fonctionnement de l'accumulateur d'énergie (7), normalisée en particulier au moyen d'un facteur de conversion, et la tension à l'entrée (2) est inférieure à une valeur seuil de différence inférieure.

10. Disjoncteur électronique selon la revendication 8 ou 9,
**caractérisé en ce que** l'unité de gestion d'énergie (10) autorise une décharge de l'accumulateur d'énergie (7) tant que la différence entre une tension d'alimentation du circuit (8) et la tension d'entrée du disjoncteur électronique (1) est inférieure à une valeur limite d'arc électrique parasite, laquelle valeur limite d'arc électrique parasite correspond à la somme d'une valeur de décalage et de la valeur de perte de tension entre une source de tension (11) générant la tension d'alimentation et l'entrée (2), la valeur de décalage étant en particulier comprise entre 10V et 14V.

11. Disjoncteur électronique selon l'une des revendications 1 à 10,
**caractérisé en ce que** le signal de charge est une tension de l'accumulateur d'énergie (7) ou un courant de décharge de l'accumulateur d'énergie (7).

12. Disjoncteur électronique selon l'une des revendications 1 à 11,
**caractérisé en ce que** la valeur limite du temps de décharge est comprise entre 5 ms et 25 ms, en particulier entre 10 ms et 20 ms.

13. Agencement de circuit comprenant une source de tension (11) et une charge (12),
**caractérisé en ce que** l'agencement de circuit (20) comprend un disjoncteur électronique (1) selon l'une des revendications 1 à 12, **en ce que** l'entrée (2) du disjoncteur électronique (1) est reliée à la source de tension (11) et **en ce que** la sortie (3) du disjoncteur électronique (1) est reliée à la charge (12).

14. Agencement de circuit selon la revendication 13,
**caractérisé en ce que** l'agencement de circuit (20) comprend une ligne électrique reliant la source de tension (11) et la charge (12), et **en ce que** le disjoncteur électronique (1) est disposé dans une partie d'extrémité de la ligne électrique tournée à l'opposé de la source de tension.

15. Agencement de circuit selon la revendication 13 ou 14,
**caractérisé en ce que** l'agencement de circuit (20) comprend un disjoncteur électronique de niveau supérieur (21) qui est disposé entre la source de tension (11) et le disjoncteur électronique (1), et **en ce que** l'unité de commande (6), en cas de dépassement de la valeur limite du temps de décharge, en particulier au lieu de commuter l'actionneur (5) à l'état ouvert,
- envoie au disjoncteur électronique de niveau supérieur (21) un signal d'isolement pour activer le disjoncteur électronique de niveau supérieur (21), ce par quoi le disjoncteur électronique (1) est séparé de la source de tension (11) par le disjoncteur de niveau supérieur (21), ou
- active un hacheur (13) du disjoncteur électronique (1), ce par quoi le disjoncteur électronique de niveau supérieur (21) détecte un cas de surcharge et sépare le disjoncteur électronique (1) de la source de tension (11).

16. Procédé pour empêcher la formation d'un arc électrique parasite dans un circuit (8) au moyen d'un disjoncteur électronique (1), le disjoncteur électronique (1) présentant un trajet de courant qui est inséré dans le circuit (8), dans lequel, selon le procédé
- un signal de charge est surveillé, dont la modification est corrélée à une modification de charge d'un accumulateur d'énergie (7) chargé du disjoncteur électronique (1),
- lors d'une décharge de l'accumulateur d'énergie (7) détectée sur la base du signal de charge à l'état fermé du trajet de courant, un temps de décharge pendant lequel l'accumulateur d'énergie (7) est déchargé sans interruption est déterminé, et
- lors d'un dépassement d'une valeur limite du temps de décharge, le trajet de courant est ouvert, ce par quoi la formation d'un arc électrique parasite dans le circuit (8) est empêchée.
